# EUROPEAN PATENT SPECIFICATION

(11) **EP 4 275 852 B1**
(45) Date of publication and mention of the grant of the patent: **04.09.2024**
(21) Application number: 23167182.7
(22) Date of filing: 07.04.2023
(51) Int. Cl.: B27B 5/24, B25F 5/00, B27B 5/29, B23D 47/12

(54) **TABLE CUTTING DEVICE**
TISCHSCHNEIDVORRICHTUNG
DISPOSITIF DE COUPE DE TABLE

(30) Priority: 10.05.2022 CN 202221111754 U
(43) Date of publication of application: 15.11.2023
(73) Proprietor: Nanjing Chervon Industry Co., Ltd., Nanjing, Jiangsu 211106 (CN)
(72) Inventor: ZHU, Dianbo, Nanjing, Jiangsu (CN); CHEN, Zhifeng, Nanjing, Jiangsu (CN); WANG, Shisheng, Nanjing, Jiangsu (CN)
(74) Representative: Sun, Yiming

(56) References cited:
- EP-A1- 3 305 487
- JP-A- 2018 065 222
- US-A1- 2005 257 656
- US-A1- 2007 215 243
- US-A1- 2020 055 131

## Description

This application claims priority to Chinese Patent Application No. CN 202221111754.0 filed on May 10, 2022.

### TECHNICAL FIELD

The present application relates to a power tool and, in particular, to a table cutting device.

### BACKGROUND

Table cutting devices are commonly used for cutting workpieces. Nowadays, table cutting devices can also use battery packs as energy sources. For a table cutting device using a battery pack, an operator needs to bend and squat to a position flush with the battery pack and press a key on the battery pack so that information about the remaining electric quantity of the battery pack can be observed. In order to implement this operation, the operator often needs to suspend a cutting stroke first, which is extremely inconvenient for the operator.

A table cutting device according to the preamble of claim 1 is known form EP 3 305 487 A1.

### SUMMARY

To solve the deficiencies of the related art, an object of the present application is to provide a table cutting device in which electric quantity information of a battery pack can be seen quickly.

To achieve the preceding object, the present application adopts the technical solutions described below.

According to the invention, there is provided a table cutting device comprising
a workbench on which a workpiece is capable of being placed;
a cutting assembly capable of performing a cutting operation on the workpiece; a drive assembly including a motor and driving the cutting assembly to move; and a power supply connection assembly for connecting a battery pack, where the battery pack supplies an energy source to the table cutting device. The table cutting device further includes a display assembly capable of displaying an electric quantity of the battery pack, where when the battery pack is mounted to the table cutting device, a distance between the display assembly and the battery pack is greater than or equal to 5 mm.

According to the invention, the table cutting device includes a front portion, where the front portion includes at least a support plate, and a scale rail capable of displaying a height of the cutting assembly is disposed on the support plate.

According to the invention, the display assembly is located on the front portion of the table cutting device.

According to the invention, the display assembly is disposed on the support plate.

In an example, the table cutting device includes a right portion, where the right portion connects the front portion to a rear portion opposite to the front portion, and the display assembly is located on the right portion of the table cutting device.

In an example, the table cutting device includes an upper portion, where the upper portion includes at least an upper surface of the workbench, and when the workbench is parallel to a horizontal plane, a height of the display assembly in a vertical direction is lower than or equal to a height of the upper surface in the vertical direction.

In an example, the display assembly is embedded in the upper surface of the workbench.

In an example, the display assembly is disposed on the power supply connection assembly.

In an example, the display assembly includes a light-emitting portion, where the light-emitting portion conveys electric quantity information of the battery pack by emitting light.

In an example, the display assembly further includes a function portion capable of controlling the light-emitting portion to be turned on or off.

In an example, a distance between the light-emitting portion and the function portion is greater than or equal to 50 mm. In an example, the light-emitting portion is capable of conveying failure information of the battery pack through flashing.

In an example, the light-emitting portion is capable of conveying different types of failure information of the battery pack through a speed of flashing.

In an example, the light-emitting portion includes multiple indicator bars, and different numbers of indicator bars flicker so that the light-emitting portion is capable of conveying different types of failure information of the battery pack.

In an example, the power supply connection assembly includes a battery pack connection portion for being coupled to the battery pack, where the battery pack connection portion includes a connection opening for the battery pack to be inserted into, and the connection opening faces downward.

The present application has the following benefits: the table cutting device of the present application has the additional display assembly so that an operator can observe the electric quantity information of the battery pack when operating the table cutting device, thereby greatly improving operation convenience.

### BRIEF DESCRIPTION OF DRAWINGS

FIG. 1 is a perspective view of a cutting system provided by the present application;
FIG. 2 is a perspective view of a table cutting device in FIG. 1 from another angle of view;
FIG. 3 is a perspective view of a cutting assembly and a transmission assembly;
FIG. 4 is a schematic view showing the assembly of a mounting housing and a mounting base of a motor;
FIG. 5 is a perspective view of the mounting housing and the mounting base in FIG. 4 from another angle of view;
FIG. 6 is a perspective view of a mounting base;
FIG. 7 is a sectional view of a mounting base;
FIG. 8 is a perspective view of a motor and a first housing portion;
FIG. 9 is a sectional view of a drive assembly;
FIG. 10 is a perspective view of a mounting housing;
FIG. 11 is a sectional view of a cutting assembly and a transmission assembly which are mounted to a workbench;
FIG. 12 is a perspective view of the cutting system in FIG. 1 from another angle of view;
FIG. 13 is a partial enlarged view of the table cutting device in FIG. 2;
FIG. 14 is a top view of a table cutting device;
FIG. 15 is a perspective view showing the connection of a power supply connection assembly to a drive assembly;
FIG. 16 is a view showing that a wire connects a switch assembly, a power supply connection assembly, and a drive assembly;
FIG. 17 is a perspective view of a display assembly in a first example;
FIG. 18 is a perspective view of a display assembly in a second example;
FIG. 19 is a perspective view of the display assembly in FIG. 18 from another angle of view;
FIG. 20 is a perspective view of a display assembly in a third example;
FIG. 21 is a perspective view of a display assembly in a first example;
FIG. 22 is a sectional view of the display assembly in FIG. 21;
FIG. 23 is a perspective view of a display assembly in a third example;
FIG. 24 is an exploded view of the display assembly in FIG. 23; and
FIG. 25 is a perspective view of a battery pack involved in the present application.

### DETAILED DESCRIPTION

To make solved technical problems, adopted technical solutions, and achieved technical effects of the present application more apparent, the technical solutions in examples of the present application are further described in detail below in conjunction with the drawings. The examples described below are part, not all, of the examples of the present application.

The technical solution of a cutting system provided by the present application is described in detail below in conjunction with the drawings and the examples. Electric quantity information of a battery pack connected to a table cutting device in the cutting system can be quickly seen.

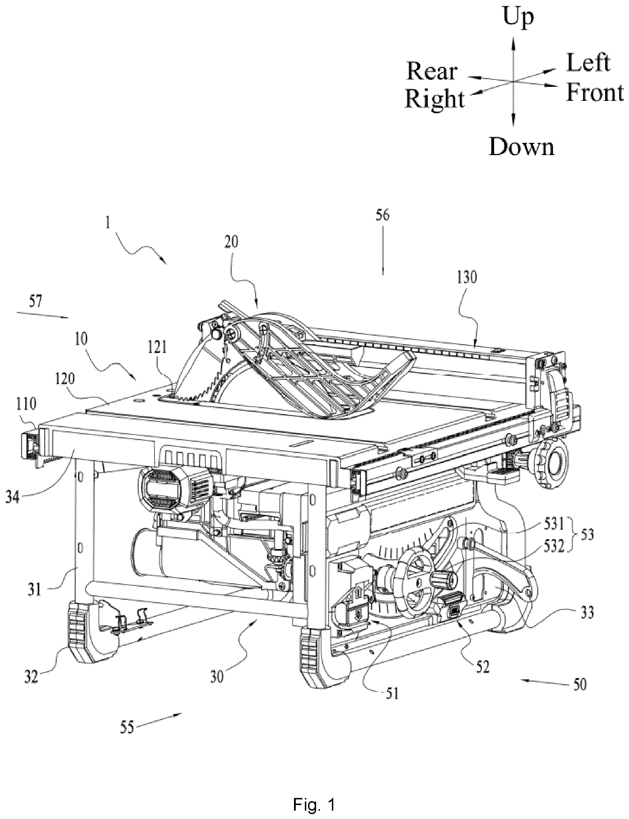

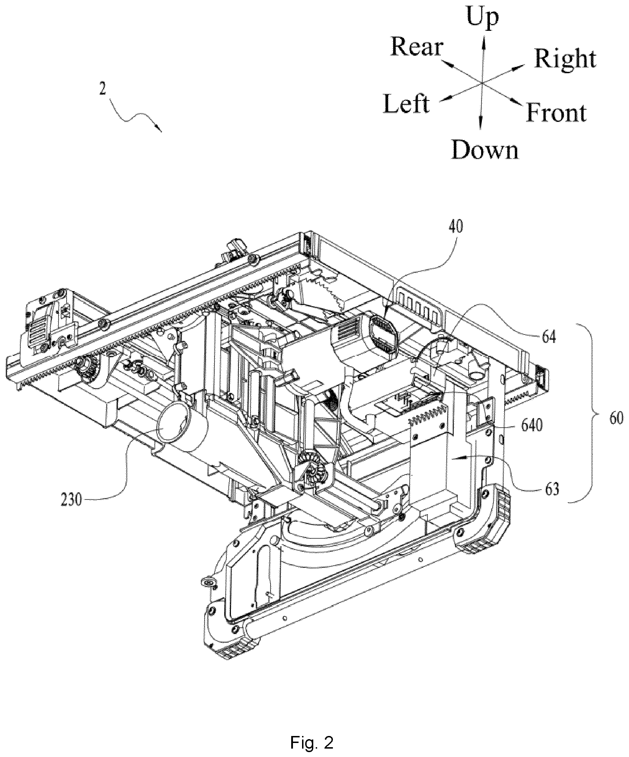

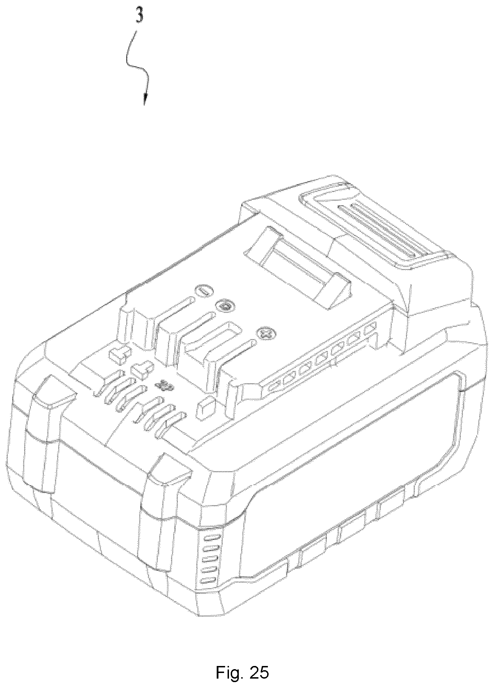

A cutting system 1 includes a table cutting device 2 and a battery pack 3 (referring to FIG. 25). The battery pack 3 supplies power to the table cutting device 2, and the battery pack 3 is detachably connected to the table cutting device 2. As shown in FIGS. 1 and 2, the table cutting device 2 includes a workbench assembly 10, a cutting assembly 20, a support assembly 30, and a drive assembly 40. The workbench assembly 10 is supported by the support assembly 30. The cutting assembly 20 is driven by the drive assembly 40 to work. The workbench assembly 10 includes rails 110 and a workbench 120. A cutting member opening 121 is formed substantially in the middle of the workbench 120. The rails 110 are connected to two sides of the workbench 120.

As shown in FIGS. 1 and 2, the cutting assembly 20 includes a cutting member 210 rotatable about a first axis, and the cutting member 210 is mounted to the drive assembly 40. The cutting assembly 20 further includes a dust discharge member 230, a blade follower 220, a shield 240, and the like. The cutting member 210 is configured to extend through the cutting member opening 121 and also configured to be capable of being lifted, lowered, and inclined relative to the workbench assembly 10. The blade follower 220 is disposed on a side of the cutting member 210 and configured to be parallel to the plane in which the cutting member 210 rotates. The blade follower 220 is disposed on the rear side of the cutting member 210 during cutting, and the rear side refers to a direction relatively away from a side from which a workpiece enters, so that the blade follower 220 separates the cut workpiece on the opposite side of the cutting. The blade follower 220 and the cutting member 210 can pass through the cutting member opening 121 together. The shield 240 is mounted outside the cutting member 210 and at least partially covers the cutting member 210 to protect a user from being hurt by the cutting member 210. The shield 240 has a shield base 241, where the shield 240 is rotatable relative to the shield base 241, and the shield 240 is connected to the blade follower 220 through the shield base 241.

As shown in FIG. 1, the support assembly 30 is connected to the workbench assembly 10 and disposed below the workbench assembly 10. The support assembly 30 includes several support rods 31 and base members 32 which are connected to each other. The several support rods 31 are disposed vertically and horizontally, and the base members 32 may be connected to the support rods 31 in different directions or may be disposed at end portions of some support rods 31. The base members 32 are in contact with a placement surface on which the table cutting device 2 is disposed. In other examples, the support rods 31 may be inclined at a certain angle relative to the workbench assembly 10. A support plate 33 is further included on a side of the support assembly 30, is connected to support rods 31, and generally forms a plane.

An adjustment mechanism 53 includes an operation member 532 and a scale rail 531, and the adjustment mechanism 53 can adjust a cutting depth of the cutting member 210. In this example, the scale rail 531 is an arc-shaped opening formed on the support plate 33, and the operation member 532 extends through the arc-shaped opening. One end of the operation member 532 is directly or indirectly connected to the cutting assembly 20, and the other end of the operation member 532 extends from the scale rail 531 to be connected to a handle. The operation member 532 is operated so that the cutting assembly 20 can be rotated to be inclined at a certain angle relative to the workbench assembly 10 and positioned at the angle. When the cutting member 210 is at a desired angle to perform an angled cutting operation, the handle or another locking device can lock and position the cutting assembly 20 for performing the angled cutting operation. In some examples, in addition to being rotatable along the scale rail 531, the handle of the operation member 532 may rotate about its own axis. The handle is connected to an adjustment rod, the adjustment rod is connected to a lifting assembly, and the handle rotates to drive the adjustment rod to rotate so that the lifting assembly is moved and the cutting assembly 20 and the drive assembly 40 are lifted and lowered.

The support plate 33 is connected to a switch assembly 51 and a display assembly 52. The switch assembly 51 is used for controlling the start, stop, lifting, and lowering of the drive assembly 40 and the cutting assembly 20. The display assembly 52 is used for displaying status information of the table cutting device 2, including, but not limited to, the display of an electric quantity, the height of the cutting assembly 20, the rotational speed of a motor 430, a rotational speed gear of the motor 430, and the like. The display assembly 52 is described in detail hereinafter.

A first region 501 is an operation region in which an operator is typically located when operating the table cutting device 2, and the operation region is further divided in detail hereinafter.

As shown in FIG. 2, a power supply connection assembly 60 is also disposed below the workbench assembly 10 and used for connecting the battery pack 3 as shown in FIG. 25 to supply an energy source to the table cutting device 2. The battery pack 3 is supported by a power supply support member 63, and the power supply support member 63 extends to form a battery pack connection portion 64 to be coupled to the battery pack 3. The battery pack connection portion 64 includes a connection opening 640 for the battery pack 3 to be inserted into, and the connection opening 640 may face downward, that is, the connection opening 640 may face the ground so that it is convenient for the user to plug and unplug the battery pack 3. In an example, the table cutting device 2 may be directly connected to external power supply equipment such as mains.

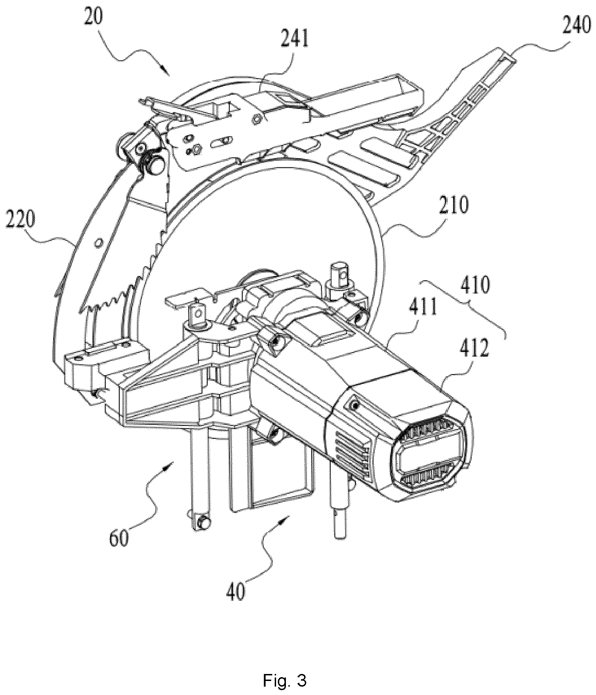

As shown in FIG. 3, the motor 430 is disposed in a mounting housing 410 and has an output shaft rotating about a second axis. The motor 430 is located on a side of the workbench assembly 10 and drives the cutting assembly 20 to move to complete an operation on the workpiece. The table cutting device 2 includes a first circuit board 420 disposed in a second housing portion 412. The first circuit board 420 is disposed on a side of the motor 430 along a first direction parallel to the second axis. For a reasonable and compact space layout, when the first circuit board 420 is disposed in the direction parallel to the second axis, a first housing portion 411 has at least one wall surface parallel to the second axis.

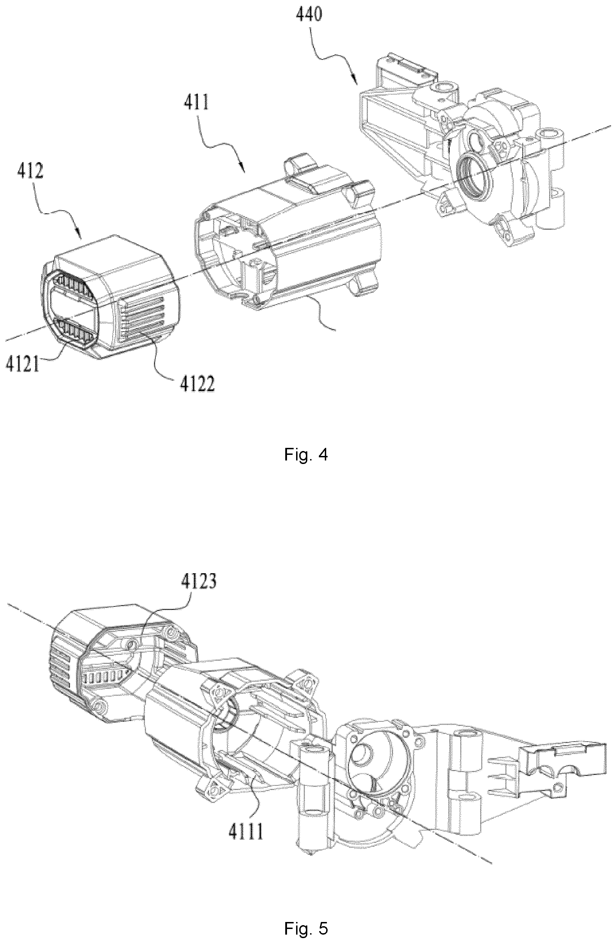

As shown in FIGS. 3 and 4, the mounting housing 410 includes the first housing portion 411 and the second housing portion 412. In this example, the first housing portion 411 and the second housing portion 412 are detachably connected to each other. A first circuit board 420 is disposed in the second housing portion 412, and the motor 430 is disposed in the first housing portion 411. The motor 430 rotates about an output axis, and the first circuit board assembly 420 is disposed along a direction parallel to the output axis. The cutting member 210 rotates in a cutting plane perpendicular to the preceding output axis. A projection of the first circuit board assembly 420 on the cutting plane at least partially coincides with a projection of the motor 430 on the cutting plane.

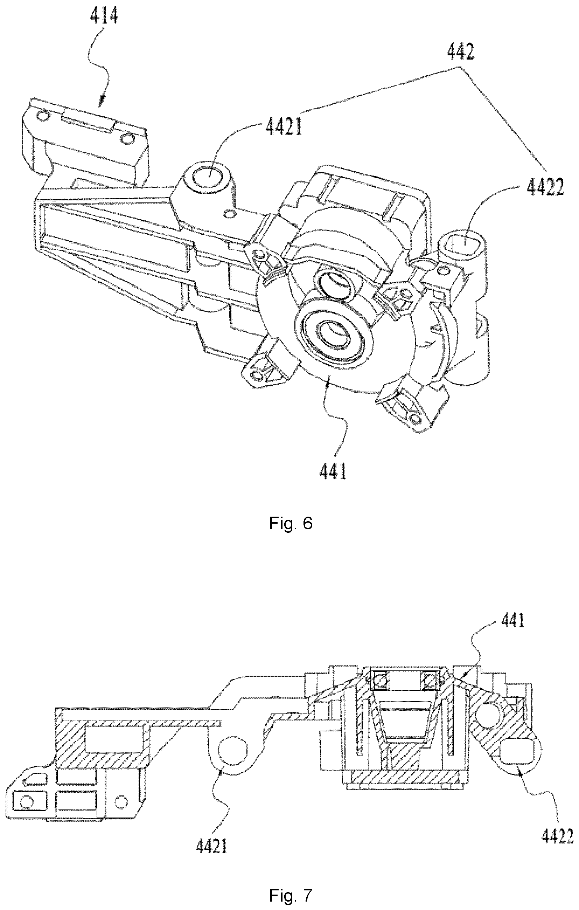

As shown in FIGS. 6 and 7, a mounting base 440 includes an accommodation cavity for placing a transmission assembly and lifting holes 442 for connecting the lifting assembly. The lifting holes 442 are formed at end portions of the mounting base 440 and connected to guide rails of the lifting assembly. A lifting hole 442 may be a sleeve structure having a certain length or several segmented sleeve structures to cover a larger area of a guide rail so that the movement of the cutting assembly 20 is more stable. In an example, the lifting holes 442 include a first lifting hole 4421 and a second lifting hole 4422. The first lifting hole 4421 is internally threaded, and the correspondingly connected guide rail is also threaded so that the cutting assembly 20 and the drive assembly 40 can climb on the guide rails. The second lifting hole 4422 functions as a guide, and the inner wall of the second lifting hole 4422 is closely connected to the corresponding guide rail and moves relative to the corresponding guide rail. The cross-section of the second lifting hole 4422 may be circular. A circular hole has a relatively high requirement on tolerance during the machining and production of the hole. Unqualified accuracy causes jamming or the shake of a power head in a lifting process, affecting the user's feel and cutting accuracy. Therefore, the second lifting hole 4422 may particularly be a waist-shaped hole or an elliptical hole. Second lifting holes 4422 are formed at two ends of the mounting base 440 separately and may particularly be disposed symmetrically to provide a more stable guide and support.

The mounting housing 410 is connected to the cutting assembly 20 and the lifting assembly through the mounting base 440. The mounting base 440 is connected to the first housing portion 411. The mounting base 440 has a mounting surface 441 facing an end of the first housing portion 411, where a via is formed in the middle of the mounting surface 441, and the output shaft of the motor 430 passes through the via. The mounting surface 441 is conical or stepped and is inclined from the central via to the edge toward the cutting member. In this example, since a centrifugal fan matches the motor 430, an air outlet is naturally formed between the inclined mounting surface 441 and the first housing portion 411, and the inclined mounting surface 441 improves the flow rate of an airflow.

The mounting base 440 further includes a blade following portion 414 formed with a structure for connecting the blade follower 220. The blade following portion 414 is fixedly connected to an end of the blade follower 220, and the cutting member 210 is indirectly connected to the mounting base 440 through the transmission assembly so that the cutting assembly 20 and the mounting base 440 keep moving at the same time. Specifically, one of the guide rails is disposed between the blade following portion 414 and the accommodation cavity for the transmission assembly so that the lifting assembly is more compact.

As shown in FIGS. 4, 5, and 8 to 10, the second housing portion 412 includes air inlets, and the air inlets include at least a first air inlet 4121 and a second air inlet 4122 which are in different directions (referring to FIG. 4). Specifically, the direction in which the first air inlet 4121 is disposed and the direction in which the second air inlet 4122 is disposed may be perpendicular to each other or at a certain angle. The air outlet is disposed at an end of the first housing portion 411 so that a heat dissipation airflow passes through the first circuit board assembly 420 and then the motor 430.

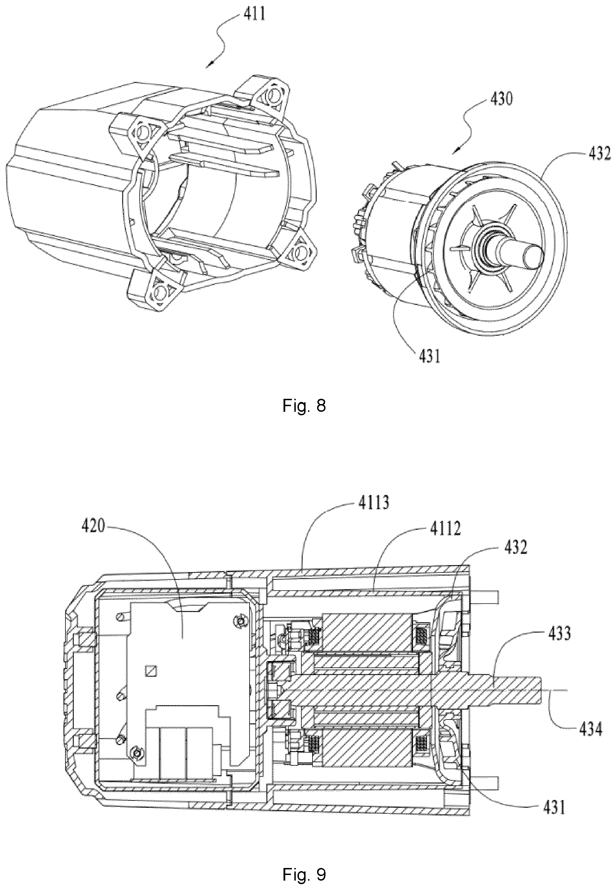

As shown in FIG. 9, in this example, the first housing portion 411 has a double-layer housing including an inner housing 4112 and an outer housing 4113 separately. The inner housing 4112 is used for forming an air cavity. An air deflector 432 is located between a motor fan 431 and the inner housing 4112 to guide an airflow to circulate between two layers of housings. In this example, the dimension of the first circuit board 420 in the direction perpendicular to the direction in which a motor shaft 433 extends is larger than the outer diameter of the motor 430. The inner housing 4112 can optimize an air path and limit the motor 430.

As shown in FIG. 5, a first partition 4111 is disposed in the first housing portion 411, where the first partition 4111 is disposed on the peripheral side of the first housing portion 411 and formed between the motor 430 and the sidewall of the first housing portion 411, and a certain gap exists between the first partition 4111 and the first housing portion 411. Two ends of the first partition 4111 are not closed so that the airflow can penetrate through the preceding gap, and the first partition 4111 functions as a flow guide. A second partition 4123 is disposed in the second housing portion 412, where the second partition 4123 is disposed between the edge of the air inlet and the sidewall of the second housing portion 412 and used for increasing the pressure of intake air. A heat dissipation element may also be disposed at the air inlet. The heat dissipation element may be disposed in the second housing portion 412, may be disposed outside the second housing portion 412, or may be configured to pass through the air inlet. The heat dissipation element is formed with multiple fins having gaps between the fins, and an external airflow passes through the air inlet and the gaps between the fins of the heat dissipation element and enters the second housing portion 412.

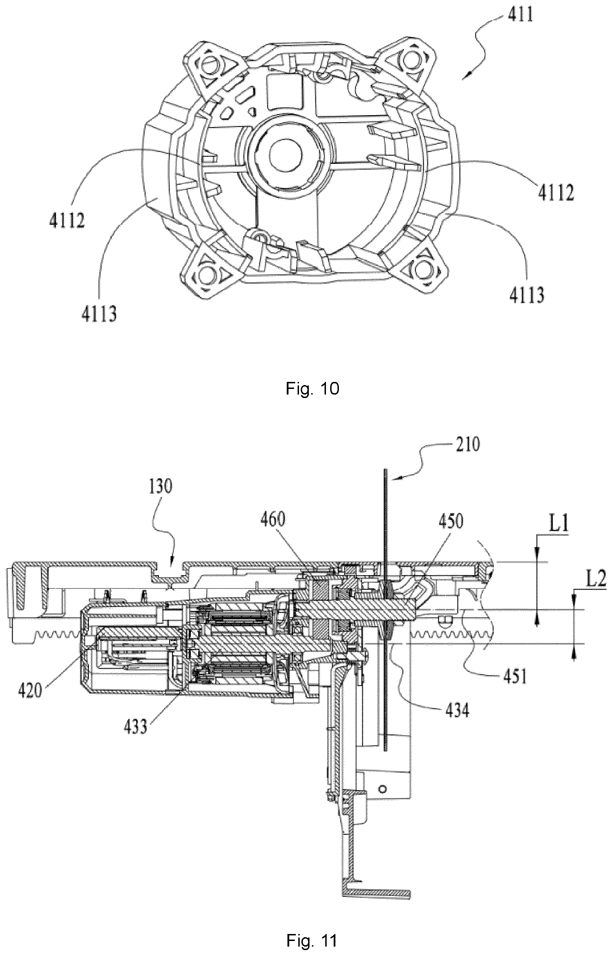

As shown in FIG. 11, the motor shaft 433 rotates about the first axis 434, an output end on a side of the motor shaft 433 is decelerated by a first gear 460 to drive the output shaft 450 to rotate about the second axis 451, and the output shaft 450 drives the cutting member 210 to rotate, thereby implementing a cutting function. The first gear 460 forms a one-stage gear transmission with the motor shaft 433. In this example, the first gear 460 is a helical gear. In an example, when the outer diameter of the first gear 460 is 8.25 inches, the gear ratio of the one-stage gear transmission is 9:37. In an example, when the outer diameter of the first gear 460 is 10 inches, the gear ratio of the one-stage gear transmission is 8:37.

In this example, the outer diameter of the motor 430 is less than or equal to 65 mm. In an example, the outer diameter of the motor 430 is 65 mm. It is to be noted that for the outer diameter of the motor 430, when the motor 430 is an inner rotor motor, the outer diameter of the motor 430 is the stator diameter of the inner rotor motor, that is, a lamination diameter; and when the motor 430 is an outer rotor motor, the outer diameter of the motor 430 is the diameter of a rotor sleeve of the outer rotor motor. A small dimension of the motor 430 is conducive to the avoidance of a dimension measurement slot 130 of the workbench 120, thereby preventing interference.

The distance between the second axis 451 of the output shaft 450 and the upper surface of the workbench 120 is a first distance LI. In this example, the first distance L1 is greater than or equal to 32 mm and less than or equal to 38 mm. The distance between the first axis 434 and the second axis 451 is a second distance L2, and the second distance L2 is greater than or equal to 20 mm and less than or equal to 30 mm. In an example, the second distance L2 is greater than or equal to 22 mm and less than or equal to 28 mm. In an example, the second distance L2 is greater than or equal to 23 mm and less than or equal to 27 mm. In an example, the second distance L2 is greater than or equal to 24 mm and less than or equal to 26 mm.

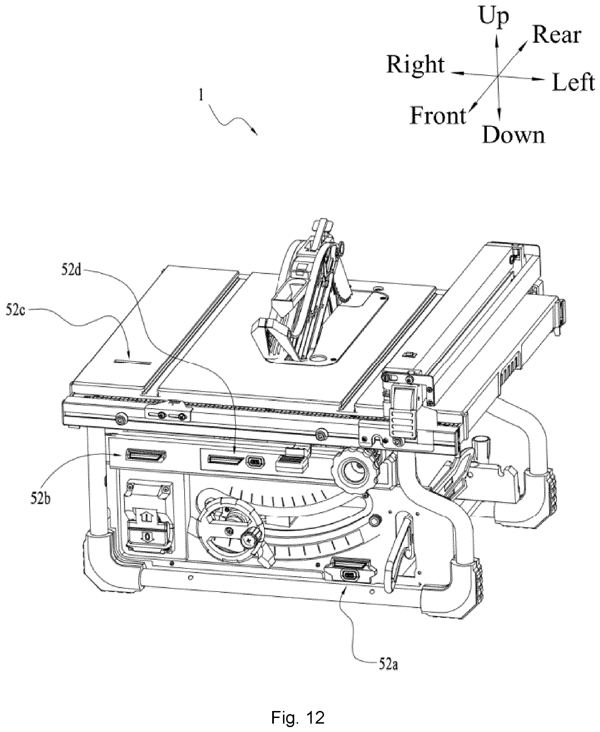

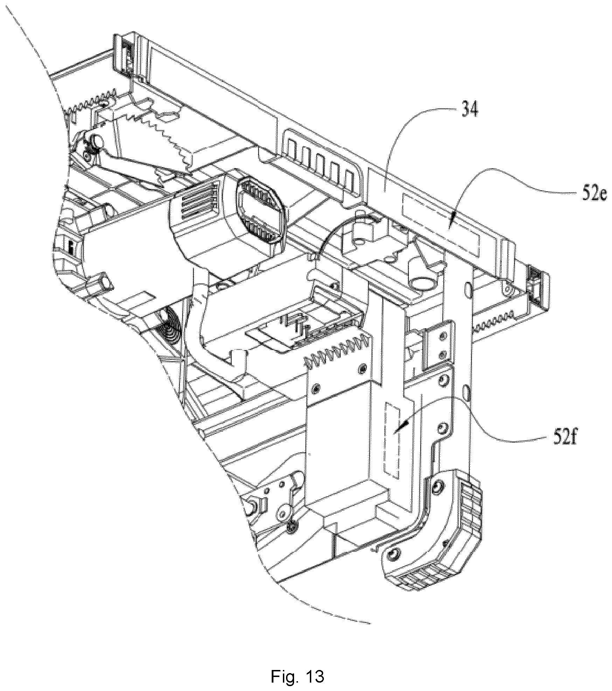

FIGS. 12 to 24 disclose some examples of the display assembly 52. In this example, the display assembly 52 of the table cutting device 2 is configured to be used for displaying an electric quantity of the battery pack 3 (referring to FIG. 25) which supplies the energy source to the table cutting device 2. As shown in FIGS. 12 and 13, when observed from the front side and the upper side of the table cutting device 2, the display assembly 52 may be located at the bottom right side of the support plate 33 to form a first display assembly 52a; the display assembly 52 may be located above the switch assembly to form a second display assembly 52b; the display assembly 52 may be located on the workbench 120 and not higher than the upper surface of the workbench 120 to form a third display assembly 52c; and the display assembly 52 may be located on the upper side of the support plate 33 and the lower side of the workbench 120 to form a fourth display assembly 52d. As shown in FIG. 13, the display assembly 52 may be located on a right plate 34 (referring to FIG. 1) of the workbench 120 on the right side of the table cutting device 2 to form a fifth display assembly 52e; and the display assembly 52 may be located on a side of the power supply support member 63 to form a sixth display assembly 52f.

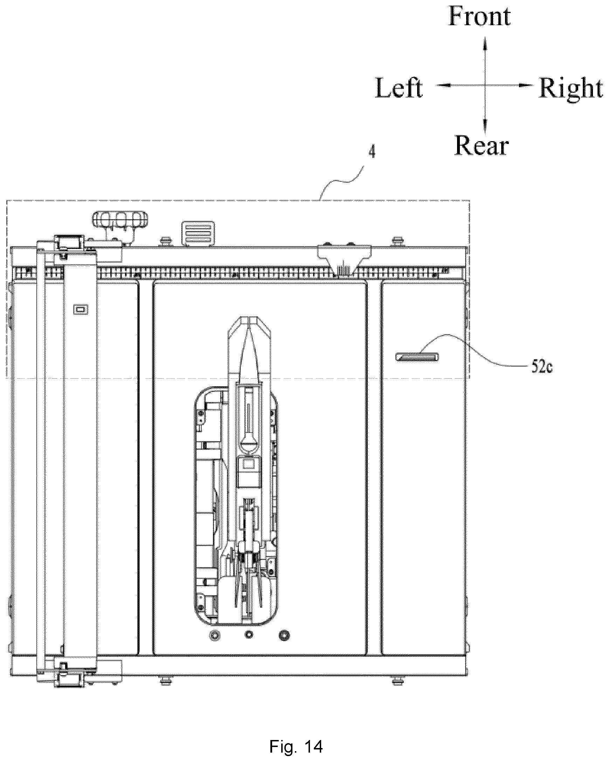

For ease of description, a standing region 4 as shown in FIG. 14 is also defined in the present application, where the standing region 4 is the front side and the right side of the table cutting device 2 and includes at least the region in a dashed box in FIG. 14. The table cutting device 2 is disposed in a placement plane, and the placement plane may be parallel to a working plane of the workbench 120. The ratio of a projection area of the standing region 4 on the placement plane to a projection area of the table cutting device 2 on the placement plane is less than or equal to 50% and may particularly be less than or equal to 30%. The display assembly 52 is disposed on any structure in the standing region 4 so that the content indicated by the display assembly 52 can be more easily observed when the user stands on the front side of the table cutting device 2 and places the workpiece. In other examples, the standing region 4 may be defined as a region enclosed from the edge of the cutting member 210 to the edge of the table cutting device 2 and includes all structures within the region. Specifically, the support plate 33 is disposed in the standing region 4 and disposed mainly below the workbench assembly 10 and between vertical support rods and horizontal support rods, and the display assembly 52 is disposed on the support plate 33. Specifically, the display assembly 52 may be disposed in a portion of the workbench assembly 10 located in the standing region 4.

Specific implementations of the first display assembly 52a, the second display assembly 52b, and the third display assembly 52c are described in detail below.

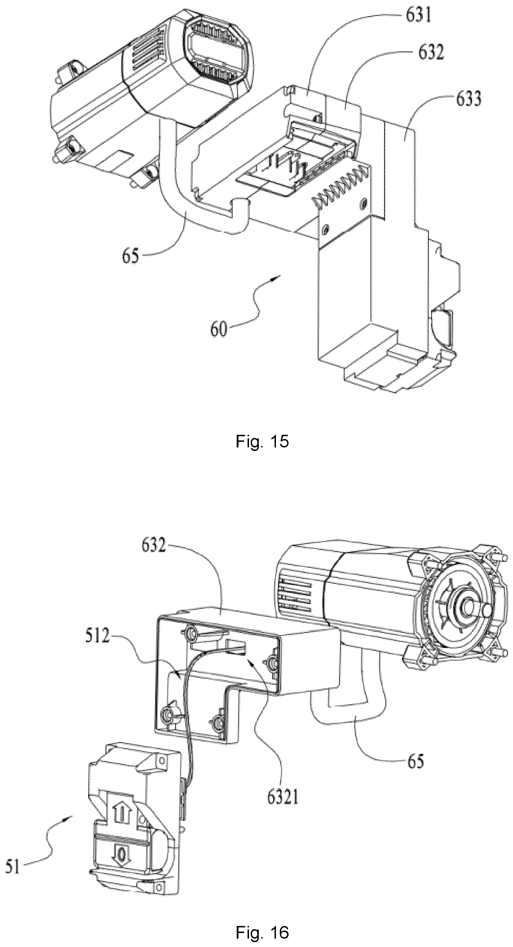

As shown in FIGS. 15 and 16, in this example, the housing of the power supply support member 63 includes a first housing 631, a second housing 632, and a third housing 633. The second housing 632 and the third housing 633 may be connected to form an L-shaped structure. The third housing 633 is connected to the switch assembly 51. A first wire harness 512 of the switch assembly 51 is wrapped by the first housing 631, the second housing 632, and the third housing 633. One end of the first wire harness 512 is connected to the switch assembly 51, the other end of the first wire harness 512 is connected to the first circuit board 420 in the mounting housing 410, and the first wire hardness 512 passes through an opening 6321 in the second housing 632 halfway. An exposed portion of the first wire harness 512 between the first housing 631 and the mounting housing 410 is wrapped by a protective tube 65.

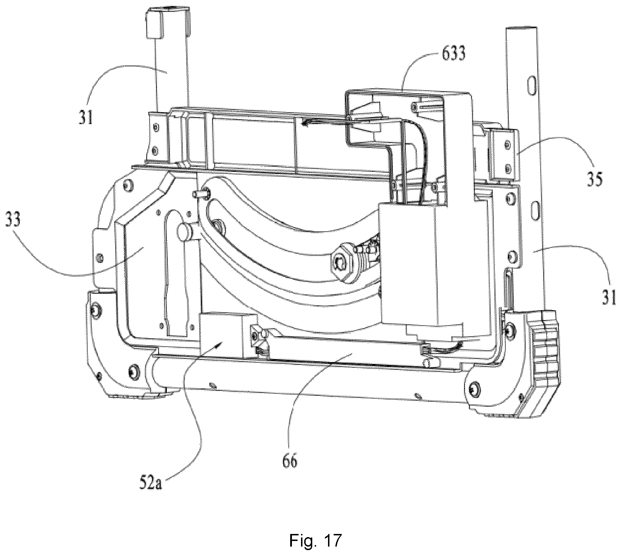

An implementation of the first display assembly 52a shown in FIG. 12 is disclosed in FIG. 17. The power supply connection assembly 60 further includes a wire harness storage housing 66. The first wire harness 512 is arranged along the rear side of the support plate 33. After the first wire harness 512 extends out of the third housing 633, the first wire harness 512 passes through the wire harness storage housing 66 and finally reaches the first display assembly 52a. The wire harness storage housing 66 is fixed to the support plate 33 by screws.

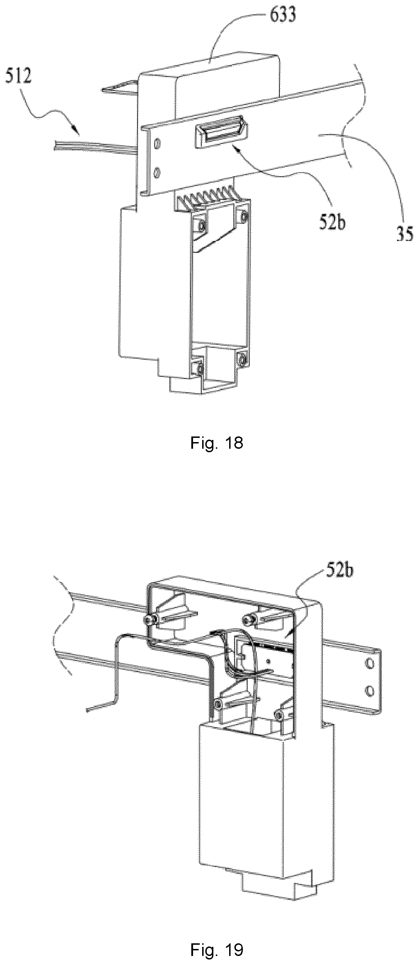

An implementation of the second display assembly 52b shown in FIG. 12 is disclosed in FIGS. 18 and 19. In conjunction with FIG. 17, the third housing 633 is fixed to a stringer 35, and two ends of the stringer 35 are separately fixed to two support rods 31 which are both located on the front side of the table cutting device 2. The second display assembly 52b is located at the top left side of the support plate 33 and specifically disposed on the stringer 35.

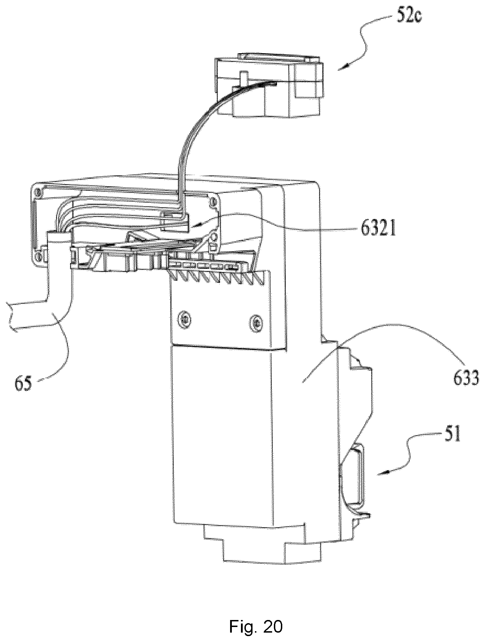

An implementation of the third display assembly 52c shown in FIG. 12 is disclosed in FIG. 20. A transparent display window is disposed on the workbench 120, and the third display assembly 52c is "embedded" in the transparent display window. The display window is substantially flush with the upper surface of the workbench 120. If the display window is lower than the upper surface of the workbench 120, the distance between the display window and the upper surface of the workbench 120 is less than or equal to 0.7 mm. In this case, the presence of the display window does not affect the movement of the workpiece on the workbench 120, and generated wood chips and the like are not easily stuck in the display window. The third display assembly 52c may be mounted to the lower surface of the workbench 120 by a screw.

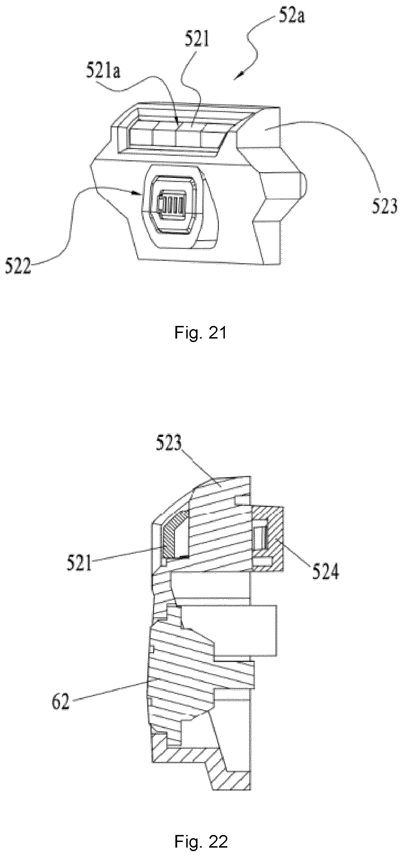

Different structures which may form the display assembly 52 are further disclosed in FIGS. 21 to 24.

As shown in FIGS. 21 and 22, the first display assembly 52a includes a light-emitting portion 521, a function portion 522, a support housing 523, and a second circuit board 524. The light-emitting portion 521 is used for indicating the electric quantity of the battery pack 3. In an example, the light-emitting portion 521 may include multiple indicator bars 521a and expresses different information through the number of indicator bars 521a which emit light. Specifically, an indicator bar 521a may be a light-emitting diode (LED) light. In other examples, the light-emitting portion 521 may include only one indicator bar 521a and displays different information through different light emission lengths of the indicator bar 521a. In this example, the light-emitting portion 521 displays the remaining electric quantity (that is, an available electric quantity) of the battery pack 3. The light-emitting portion 521 may display different information through flashing. For example, a relatively slow flicker speed indicates that it is recommended to replace the battery pack 3, and a relatively fast flicker speed indicates that the electric quantity of the battery pack 3 is about to be used up. In an example, the light-emitting portion 521 may express different information through different numbers of flickering indicator bars 521a. For example, four indicator bars 521a flashing, which indicates that the voltage of the battery pack 3 is too low, and two indicator bars 521a flashing, which indicates that the temperature of the battery pack 3 is too high.

As shown in FIG. 22, in an example, no housing covers the top of the light-emitting portion 521, that is to say, when standing and looking down, the operator can still see the light of the light-emitting portion 521 clearly without bending, squatting, and other actions.

In an example, at least one function portion 522 is also provided on the first display assembly 52a. In this example, when the operator activates the function portion 522, the light-emitting portion 521 is caused to display the electric quantity information of the battery pack 3. The light-emitting portion 521 is on for several seconds and then turns off so that the electric quantity information disappears. As shown in FIG. 12, the function portion 522 may be located on two sides of the light-emitting portion 521 or above the light-emitting portion 521 in addition to the lower side of the light-emitting portion 521. In an example, the function portion 522 and the light-emitting portion 521 of the fourth display assembly 52d are separated from each other. In an example, the distance between the function portion 522 and the light-emitting portion 521 is greater than or equal to 50 mm. For example, in the third display assembly 52c, the light-emitting portion 521 may be embedded in the workbench 120, and the function portion 522 may be disposed on the support plate 33 on the front side of the workbench or at a position around the support plate 33 for the operator to operate the function portion 522 conveniently. In this case, the distance between the function portion 522 on the first display assembly 52a and the light-emitting portion 521 on the first display assembly 52a is greater than or equal to 100 mm or even greater than or equal to 150 mm. In one example, the function portion 522 could be a key or button.

In an example, the first display assembly 52a does not include the function portion 522. As soon as the battery pack 3 having power is inserted into the table cutting device 2, the light-emitting portion 521 is in an activated state and the electric quantity information is always displayed.

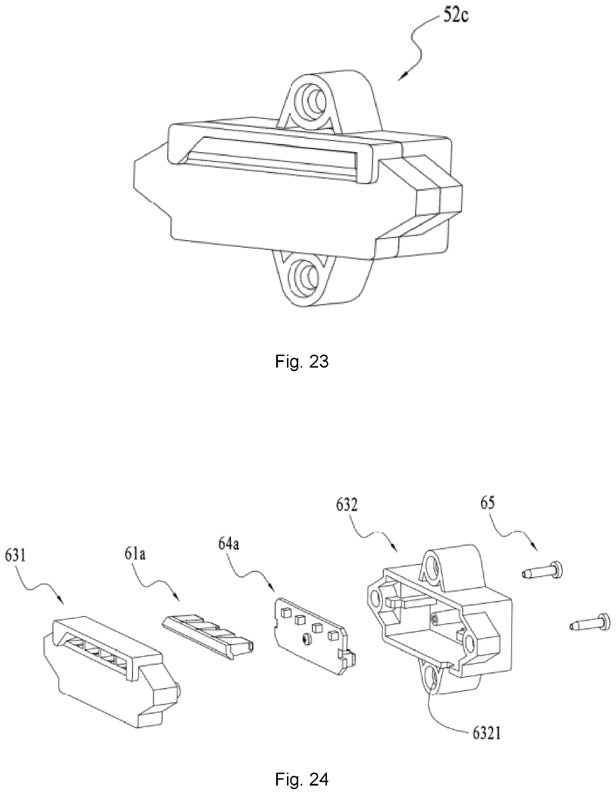

As shown in FIGS. 23 and 24, the third display assembly 52c is another structural form of the display assembly 52. The support housing 523 is composed of a cover plate 631 and a rear housing 632, the second circuit board 524 is fixed to the rear housing 632 by a screw, the light-emitting portion 521 passes through the cover plate 631, and light partition plates are disposed on the cover plate 631 to partition light rays. Fastening screws 65 fix the cover plate 631 and the rear housing 632 together, and additional screws pass through positioning holes 6321 on the rear housing 632 to fix the third display assembly 52c at a desired position.

Referring to FIG. 1 again, a front portion 50, a rear portion 57, a right portion 55, and an upper portion 56 of the table cutting device 1 are now defined. The front portion 50 refers to all components of the table cutting device 1 which can be seen when observed from the direct front of the table cutting device 1. The rear portion 57 is opposite to the front portion 50. The right portion 55 refers to all components of the table cutting device 1 which can be seen when observed from the direct right of the table cutting device 1, and the right portion 55 connects the front portion 50 to the rear portion 57. The upper portion 56 refers to all components of the table cutting device 1 which can be seen when observed directly above the table cutting device 1. In this example, the front portion 50 of the table cutting device 2 includes the support plate 33, the switch assembly 51, the adjustment mechanism 53, and the front edge of the workbench 120. The right portion 55 of the table cutting device 2 includes the right plate 34 of the workbench 120, support rods 31 on the right side, base members 32 on the right side, the right surface of a workpiece support fence 130, a right visible region of the second housing portion 412, and a right visible region of the power supply connection assembly 60. The upper portion 56 of the table cutting device 2 includes the upper surface of the workbench 120, the upper surface of the workpiece support fence 130, and the like.

The display assembly 52 is at least partially disposed on the front portion 50, the rear portion 57, the right portion 55, or the upper portion 56 of the table cutting device 2. In an example, the light-emitting portion 521 of the display assembly 52 and the function portion 522 of the display assembly 52 may be located at two different portions among the front portion 50, the rear portion 57, the right portion 55, and the upper portion 56 of the table cutting device 2, separately.

The present application has the following beneficial effect: when the operator operates the table cutting device 2, in order to know the electric quantity information of the battery pack 3, the operator does not need to bend and press an electric quantity display button on the battery pack 3 and can easily observe the electric quantity information at a standing position. Various examples are provided by the present application so that it is convenient for the operator to see the electric quantity of the battery pack 3 clearly at a glance when standing at different positions. The example in which the light-emitting portion 521 and the function portion 522 are separated from each other further facilitates the operation of the operator and the operator can activate, with one key, the light-emitting portion embedded in the surface of the workbench, which is very convenient.

The distance between the display assembly 52 disclosed by the present application and the battery pack 3 mounted on the table cutting device 2 is greater than or equal to 5 mm. It is to be noted that some battery packs themselves include electric quantity display mechanisms, and such electric quantity display mechanisms are disposed on the battery packs, belong to a common technique, and therefore do not fall within the scope of the present application. However, the distance between the display assembly 52 involved in the present application and the battery pack 3 is at least 5 mm, which is not contradictory to the case where the battery pack 3 has its own electric quantity display. That is to say, the table cutting device 2 may include both the display assembly 52 disclosed by the present application and an electric quantity display mechanism of the battery pack 3. In an example, when the battery pack 3 is mounted to the table cutting device 2, the distance between the display assembly 52 and the battery pack 3 may be at least 10 mm, 20 mm, or 30 mm.

In addition, in addition to the table cutting device 2, the battery pack 3 is also adaptable to other types of power tools, such as a circular saw and a reciprocating saw.

## Claims

1. A table cutting device (2), comprising:
a workbench (120) on which a workpiece is placed;
a cutting assembly (20) capable of performing a cutting operation on the workpiece;
a drive assembly (40) comprising a motor (430) and driving the cutting assembly (20) to move; and
a power supply connection assembly (60) for connecting a battery pack (3), wherein the battery pack (3) supplies an energy source to the table cutting device (2);
wherein the table cutting device (2) further comprises:
a display assembly (52) capable of displaying an electric quantity of the battery pack (3), wherein when the battery pack (3) is mounted to the table cutting device (2), a distance between the display assembly (52) and the battery pack (3) is greater than or equal to 5 mm,
**characterized in that**,
the table cutting device (2) comprises a front portion (50), wherein the front portion (50) comprises at least a support plate (33), and a scale rail (531) capable of displaying a height of the cutting assembly (20) is disposed on the support plate (33),
wherein the display assembly (52) is located on the front portion (50) of the table cutting device (2) or wherein the display assembly (52) is disposed on the support plate (33).

2. The table cutting device (2) according to claim 1, comprising a right portion (55), wherein the right portion (55) connects the front portion (50) to a rear portion (57) opposite to the front portion (50), and the display assembly (52) is located on the right portion (55) of the table cutting device (2).

3. The table cutting device (2) according to claim 1, comprising an upper portion (56), wherein the upper portion (56) comprises at least an upper surface of the workbench (120), and when the workbench (120) is parallel to a horizontal plane, a height of the display assembly (52) in a vertical direction is lower than or equal to a height of the upper surface in the vertical direction.

4. The table cutting device (2) according to claim 3, wherein the display assembly (52) is embedded in the upper surface of the workbench (120).

5. The table cutting device (2) according to claim 1, wherein the display assembly (52) is disposed on the power supply connection assembly (60).

6. The table cutting device (2) according to claim 1, wherein the display assembly (52) comprises a light-emitting portion (521), wherein the light-emitting portion (521) conveys electric quantity information of the battery pack (3) by emitting light.

7. The table cutting device (2) according to claim 6, wherein the display assembly (52) further comprises a function portion (522) capable of controlling the light-emitting portion (521) to be turned on or off.

8. The table cutting device (2) according to claim 7, wherein a distance between the light-emitting portion (521) and the function portion (522) is greater than or equal to 50 mm.

9. The table cutting device (2) according to claim 6, wherein the light-emitting portion (521) is capable of conveying failure information of the battery pack (3) through flashing.

10. The table cutting device (2) according to claim 9, wherein the light-emitting portion (521) is capable of conveying different types of failure information of the battery pack (3) through a speed of flashing.

11. The table cutting device (2) according to any one of claims 6 to 10, wherein the light-emitting portion (521) comprises a plurality of indicator bars (521a), and different numbers of indicator bars (521a) flash so that the light-emitting portion (521) is capable of conveying different types of failure information of the battery pack (3).

12. The table cutting device (2) according to claim 1, wherein the power supply connection assembly (60) comprises a battery pack (3) connection portion for being coupled to the battery pack (3), wherein the battery pack (3) connection portion comprises a connection opening (640) for the battery pack (3) to be inserted into, and the connection opening faces downward.

## Patentansprüche

1. Tischschneidevorrichtung (2), umfassend:
eine Werkbank (120), auf der ein Werkstück platziert wird;
eine Schneidevorrichtung (20), die in der Lage ist, einen Schneidevorgang an dem Werkstück auszuführen;
eine Antriebsbaugruppe (40), die einen Motor (430) umfasst und die Schneidevorrichtung (20) zur Bewegung antreibt; und
eine Stromversorgungsanschlussbaugruppe (60) zum Anschließen eines Batteriesatzes (3), wobei der Batteriesatz (3) eine Energiequelle für die Tischschneidevorrichtung (2) darstellt;
wobei die Tischschneidevorrichtung (2) weiterhin umfasst:
eine Anzeigeeinheit (52), die in der Lage ist, eine Energiemenge des Batteriesatzes (3) anzuzeigen, wobei, wenn der Batteriesatz (3) an der Tischschneidevorrichtung (2) angebracht ist, ein Abstand zwischen der Anzeigeeinheit (52) und dem Batteriesatz (3) größer als oder gleich 5 mm ist,
**dadurch gekennzeichnet, dass**
die Tischschneidevorrichtung (2) einen vorderen Teil (50) umfasst, wobei der vordere Teil (50) mindestens eine Trägerplatte (33) umfasst, und eine Maßstabsschiene (531), die eine Höhe der Schneideinheit (20) anzeigen kann, ist auf der Trägerplatte (33) angeordnet,
wobei die Anzeigeeinheit (52) am vorderen Teil (50) der Tischschneidevorrichtung (2) angeordnet ist oder wobei die Anzeigeeinheit (52) auf der Trägerplatte (33) angeordnet ist.

2. Tischschneidevorrichtung (2) nach Anspruch 1, mit einem rechten Teil (55), wobei der rechte Teil (55) den vorderen Teil (50) mit einem hinteren Teil (57) verbindet, der dem vorderen Teil (50) gegenüberliegt, und die Anzeigeeinheit (52) befindet sich auf dem rechten Teil (55) der Tischschneidevorrichtung (2).

3. Tischschneidevorrichtung (2) nach Anspruch 1, die einen oberen Teil (56) umfasst, wobei der obere Teil (56) mindestens eine obere Fläche der Werkbank (120) umfasst, und wenn die Werkbank (120) parallel zu einer horizontalen Ebene ist, ist eine Höhe der Anzeigeeinheit (52) in vertikaler Richtung kleiner oder gleich einer Höhe der oberen Fläche in vertikaler Richtung.

4. Tischschneidevorrichtung (2) nach Anspruch 3, wobei die Anzeigeeinheit (52) in die obere Fläche der Werkbank (120) integriert ist.

5. Tischschneidevorrichtung (2) nach Anspruch 1, wobei die Anzeigeeinheit (52) auf der Stromversorgungsanschlusseinheit (60) angeordnet ist.

6. Tischschneidevorrichtung (2) nach Anspruch 1, wobei die Anzeigeeinheit (52) einen lichtemittierenden Teil (521) umfasst, wobei der lichtemittierende Teil (521) Informationen über die Strommenge des Batteriesatzes (3) durch Aussenden von Licht übermittelt.

7. Tischschneidevorrichtung (2) nach Anspruch 6, wobei die Anzeigeanordnung (52) ferner einen Funktionsabschnitt (522) umfasst, der in der Lage ist, den lichtemittierenden Abschnitt (521) so zu steuern, dass er ein- oder ausgeschaltet wird.

8. Tischschneidevorrichtung (2) nach Anspruch 7, wobei ein Abstand zwischen dem lichtemittierenden Teil (521) und dem Funktionsteil (522) größer als oder gleich 50 mm ist.

9. Tischschneidevorrichtung (2) nach Anspruch 6, wobei der lichtemittierende Teil (521) in der Lage ist, Fehlerinformationen des Batteriesatzes (3) durch Blinken zu melden.

10. Tischschneidevorrichtung (2) nach Anspruch 9, wobei der lichtemittierende Teil (521) in der Lage ist, verschiedene Arten von Fehlerinformationen des Batteriesatzes (3) durch eine Blinkfrequenz zu übermitteln.

11. Tischschneidevorrichtung (2) nach Anspruch 6 bis 10, wobei der lichtemittierende Teil (521) eine Vielzahl von Anzeigebalken (521a) umfasst, und eine unterschiedliche Anzahl von Anzeigebalken (521a) blinkt, sodass der lichtemittierende Teil (521) in der Lage ist, verschiedene Arten von Fehlerinformationen des Batteriesatzes (3) zu melden.

12. Tischschneidevorrichtung (2) nach Anspruch 1, wobei die Stromversorgungsanschlussbaugruppe (60) einen Anschlussabschnitt für den Batteriesatz (3) umfasst, der mit dem Batteriesatz (3) gekoppelt ist, wobei der Verbindungsabschnitt des Batteriesatzes (3) eine Verbindungsöffnung (640) zum Einsetzen des Batteriesatzes (3) aufweist und die Verbindungsöffnung nach unten gerichtet ist.

## Revendications

1. Dispositif de coupe sur table (2), comprenant :
une table de travail (120) sur laquelle est placée une pièce usinée ;
un ensemble de coupe (20) capable d'exécuter une opération de coupe sur la pièce usinée ;
un ensemble d'entraînement (40) comprenant un moteur (430) et entraînant l'ensemble de coupe (20) en déplacement ; et
un ensemble de connexion d'alimentation électrique (60) pour la connexion d'un bloc de batterie (3), dans lequel le bloc de batterie (3) fournit une source d'énergie au dispositif de coupe sur table (2) ;
dans lequel le dispositif de coupe sur table (2) comprend en outre :
un ensemble d'affichage (52) capable d'afficher une quantité électrique du bloc de batterie (3), dans lequel, lorsque le bloc de batterie (3) est monté sur le dispositif de coupe sur table (2), une distance entre l'ensemble d'affichage (52) et le bloc de batterie (3) est supérieure ou égale à 5 mm,
**caractérisé en ce que**
le dispositif de coupe sur table (2) comprend une partie avant (50), dans lequel la partie avant (50) comprend au moins une plaque de support (33), et un rail d'échelle (531) capable d'afficher une hauteur de l'ensemble de coupe (20) est disposé sur la plaque de support (33),
dans lequel l'ensemble d'affichage (52) se situe sur la partie avant (50) du dispositif de coupe sur table (2) ou dans lequel l'ensemble d'affichage (52) est disposé sur la plaque de support (33).

2. Dispositif de coupe sur table (2) selon la revendication 1, comprenant une partie droite (55), dans lequel la partie droite (55) relie la partie avant (50) à une partie arrière (57) opposée à la partie avant (50), et l'ensemble d'affichage (52) se situe sur la partie droite (55) du dispositif de coupe sur table (2).

3. Dispositif de coupe sur table (2) selon la revendication 1, comprenant une partie supérieure (56), dans lequel la partie supérieure (56) comprend au moins une surface supérieure de la table de travail (120), et lorsque la table de travail (120) est parallèle à un plan horizontal, une hauteur de l'ensemble d'affichage (52) dans une direction verticale est inférieure ou égale à une hauteur de la surface supérieure dans la direction verticale.

4. Dispositif de coupe sur table (2) selon la revendication 3, dans lequel l'ensemble d'affichage (52) est intégré à la surface supérieure de la table de travail (120).

5. Dispositif de coupe sur table (2) selon la revendication 1, dans lequel l'ensemble d'affichage (52) est disposé sur l'ensemble de connexion d'alimentation électrique (60).

6. Dispositif de coupe sur table (2) selon la revendication 1, dans lequel l'ensemble d'affichage (52) comprend une partie émettrice de lumière (521), dans lequel la partie émettrice de lumière (521) fournit des informations de quantité électrique du bloc de batterie (3) en émettant de la lumière.

7. Dispositif de coupe sur table (2) selon la revendication 6, dans lequel l'ensemble d'affichage (52) comprend en outre une partie fonctionnelle (522) capable de commander l'allumage et l'extinction de la partie émettrice de lumière (521).

8. Dispositif de coupe sur table (2) selon la revendication 7, dans lequel une distance entre la partie émettrice de lumière (521) et la partie fonctionnelle (522) est supérieure ou égale à 50 mm.

9. Dispositif de coupe sur table (2) selon la revendication 6, dans lequel la partie émettrice de lumière (521) est capable de fournir des informations d'échec du bloc de batterie (3) par un clignotement.

10. Dispositif de coupe sur table (2) selon la revendication 9, dans lequel la partie émettrice de lumière (521) est capable de fournir différents types d'informations d'échec du bloc de batterie (3) par une vitesse de clignotement.

11. Dispositif de coupe sur table (2) selon l'une quelconque des revendications 6 à 10, dans lequel la partie émettrice de lumière (521) comprend une pluralité de barres d'indicateur (521a), et des nombres différents de barres d'indicateur (521a) clignotent de sorte que la partie émettrice de lumière (521) est capable de fournir différents types d'informations d'échec du bloc de batterie (3).

12. Dispositif de coupe sur table (2) selon la revendication 1, dans lequel l'ensemble de connexion d'alimentation électrique (60) comprend une partie de connexion de bloc de batterie (3) destinée à l'accouplement au bloc de batterie (3), dans lequel la partie de connexion du bloc de batterie (3) comprend une ouverture de connexion (640) pour l'insertion du bloc de batterie (3), et l'ouverture de connexion est tournée vers le bas.
